# EUROPÄISCHE PATENTSCHRIFT

(11) **EP 0 621 679 B1**
(45) Veröffentlichungstag und Bekanntmachung des Hinweises auf die Patenterteilung: **17.01.1996**
(21) Anmeldenummer: 94104648.4
(22) Anmeldetag: 24.03.1994
(51) Int. Cl.: H02M 3/142, H02M 3/158

(54) **Verfahren zur Umsetzung von Gleichspannungen**
Method of conversion for DC voltages
Procédé de conversion de tensions continues

(30) Priorität: 22.04.1993 DE 4313169
(43) Veröffentlichungstag der Anmeldung: 26.10.1994
(73) Patentinhaber: ABB Management AG, CH-5401 Baden (CH)
(72) Erfinder: Brennwald, Hans Peter, CH-5417 Untersiggenthal (CH); Skarpetowski, Grzegorz, Dr., CH-5417 Untersiggenthal (CH)

(56) Entgegenhaltungen:
- US-A- 3 984 799
- US-A- 4 384 321

## Beschreibung

### TECHNISCHES GEBIET

Bei der Erfindung wird ausgegangen von einem Verfahren zur Umsetzung von Gleichspannungen nach dem Oberbegriff des Patentanspruchs 1.

### STAND DER TECHNIK

Mit dem Oberbegriff des Patentanspruchs 1 nimmt die Erfindung auf einen Stand der Technik Bezug, wie er aus der deutschen Zeitschrift: Elektrische Bahnen 90 (1992) 10, S. 319 - 327 bekannt ist. Dort werden aktive und passive Maßnahmen zur Beherrschung niederfrequenter Netzrückwirkungen von Bahnfahrzeugen mit Drehstromantriebstechnik angegeben. Drei versetzt taktende Teilsteller und ihre Stellerdrosseln werden zu einem virtuellen Steller mit einer mehrstufigen Schaltfunktion zusammengefaßt. Mit der resultierenden 3fachen Stellerfrequenz wird zwischen benachbarten Stufen der Schaltfunktion hin und hergeschaltet. Dadurch haben die Wechselanteile im Vergleich zum einfachen Steller nur noch 1/3 von deren Größe.

Die Aussteuerung erfolgt kontinuierlich und erfordert bei einem komplizierten Oberschwingungsspektrum einen beachtlichen Zusatzaufwand.

In dem Konferenzbericht von W. Geißler und F. Unger-Weber mit dem Titel: "MODELLING THE THREE PHASE PROPULSION SYSTEM OF A MODERN MULTISYSTEM-LOCOMOTIVE", 4th European Conference on Power Electronics and Application, S. 4-632 - 4-637, Firenze, September 3 - 6, 1991, veröffentlicht durch: Litografia GEDA, Via Villa Glori, 6, 10133 Torino - Italy, ist ein 2Systemkonzept für Bahnantriebe angegeben, das für eine Netz-Wechselspannung von 15 kV, 16 2/3 Hz, und eine Netz-Gleichspannung von 3 kV ausgelegt ist. Die Antriebsmaschinen werden über einen oder 2 Wechselrichter aus einem oder 2 Gleichspannungszwischenkreisen gespeist. Im Falle des Wechselstromnetzes wird der Gleichspannungszwischenkreis über 2 parallelgeschaltete 4Quadrantensteller gespeist, im Falle des Gleichspannungsnetzes über 2 in Reihe geschaltete Gleichspannungssteller oder über Tiefsetzsteller, wobei jeder Steller über eine Stellerdrossel an den Gleichspannungszwischenkreis angeschlossen ist. Durch eine erhöhte Frequenz und versetzte Steuerung werden Oberschwingungen reduziert.

Aus der DE-A1-3 724 526 ist eine Stromrichterschaltung zur Speisung eines Gleichspannungszwischenkreises bekannt, die bei Wechselspannungseinspeisung als 4Quadrantensteller und bei Gleichspannungseinspeisung als Tiefsetz-Hochsetzsteller bzw. Hochsetz-Tiefsetzsteller betrieben wird. Die Schaltung weist 4 Zweige in Brückenschaltung auf, wobei jeder Zweig aus einem zünd- und löschbaren Ventil mit dazu antiparalleler Diode besteht. Mindestens 2 Einspeisestromrichter speisen parallel den Gleichspannungszwischenkreis über je eine Glättungsdrossel.

### DARSTELLUNG DER ERFINDUNG

Die Erfindung, wie sie im Patentanspruch 1 definiert ist, löst die Aufgabe, ein Verfahren zur Umsetzung von Gleichspannungen der eingangs genannten Art derart weiterzuentwickeln, daß stromrichterbedingte Oberschwingungen reduziert werden.

Ein Vorteil der Erfindung besteht darin, daß der Aufwand für Filter zum Reduzieren von Oberschwingungen reduziert werden kann. Die Gleichstromsteller brauchen nicht mit erhöhter Frequenz betrieben zu werden.

### KURZE BESCHREIBUNG DER ZEICHNUNGEN

Die Erfindung wird nachstehend anhand von Ausführungsbeispielen erläutert. Es zeigen:
- Fig. 1: einen selbstgeführten Stromrichter zur Speisung einer 3phasigen Last aus einem Wechselspannungsnetz oder Gleichspannungsnetz,
- Fig. 2: einen Abwärtssteller mit Regelung,
- Fig. 3: einen Aufwärtssteller mit Regelung,
- Fig. 4a - 4d: Signaldiagramme phasenverschobener Leitdauersignale von 4 parallelgeschalteten Stromrichtern,
- Fig. 5: ein Signaldiagramm des Summenstörstromes in Abhängigkeit vom Tastverhältnis bei 4 parallelgeschalteten Stromrichtern und
- Fig. 6: ein Signaldiagramm der Abhängigkeit der Zwischenkreisgleichspannung von der Eingangsgleichspannung für oberschwingungsfreie Spannungsübersetzungen.

### WEGE ZUR AUSFÜHRUNG DER ERFINDUNG

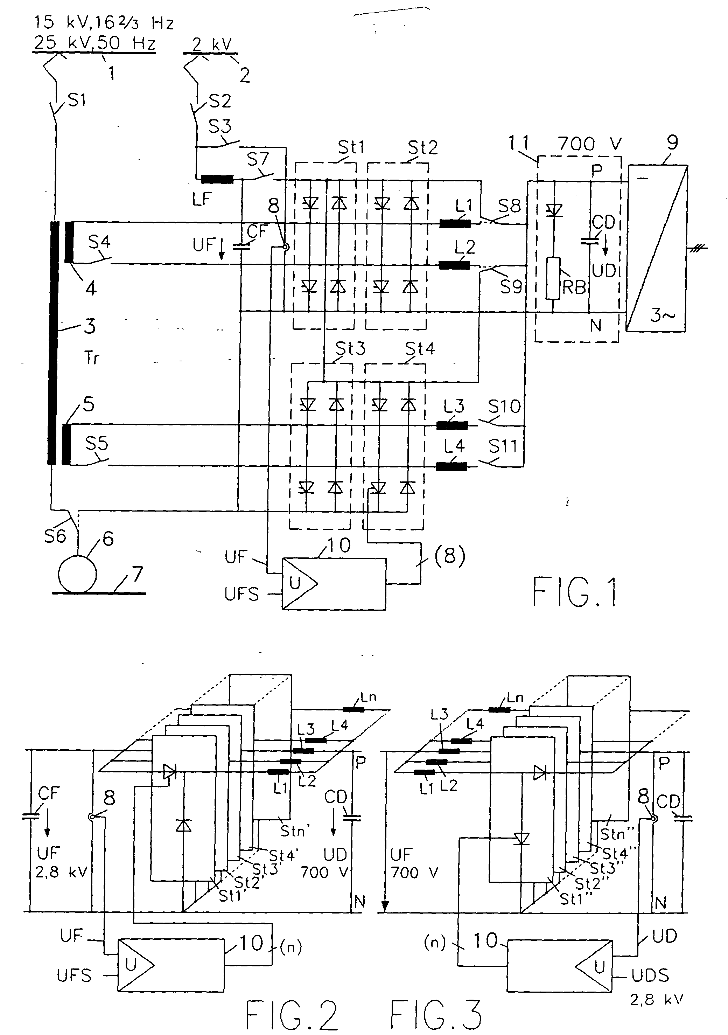

Fig. 1 zeigt in einem Anwendungsbeispiel eine universelle Stromrichterschaltung für schienengebundene Fahrzeuge, die von einem Wechselspannungsnetz (1) mit z. B. 16 2/3 Hz, 15 kV Wechselspannung oder 50 Hz und 25 kV Wechselspannung oder von einem Gleichspannungsnetz (2) mit z. B. 2 kV gespeist werden kann. Dabei bezieht sich die Erfindung nur auf eine Gleichstromspeisung der Stromrichterschaltung.

Zwei zwischenkreisseitig parallelgeschaltete 4Quadrantensteller bzw. selbstgeführte Stromrichter (St1, St2; St3, St4), die aus 4 2Quadrantenstellern (St1 - St4) bestehen, sind über einen Gleichspannungszwischenkreis (11) mit einem Zwischenkreiskondensator (CD), an dem eine Zwischenkreisgleichspannung bzw. 2. .Gleichspannung (UD) abfällt, mit einem Wechselrichter (9) verbunden, an dem wechselstromseitig eine nicht dargestellte 3phasige Last, z. B. eine Asynchronmaschine, angeschlossen sein kann. Parallel zu dem Zwischenkreiskondensator (CD) ist eine Reihenschaltung aus einem Bremsthyristor und einem Bremswiderstand (RB) vorgesehen, um überschüssige Bremsenergie, die beim Bremsen eines Fahrzeuges nicht in das jeweilige Stromversorgungsnetz (1, 2) zurückgespeist werden kann, in Wärme umzuwandeln.

Jeder 2Quadrantensteller (St1 - St4) weist 2 in Reihe geschaltete GTO-Thyristoren mit dazu antiparallelen Dioden auf. Durch den Betrieb der 2Quadrantensteller (St1 - St4) wird die 2. Gleichspannung (UD) auf einen 2. Gleichspannungssollwert (UDS) von z. B. 700 V eingestellt, wobei eine vorgebbare Abweichung zugelassen ist.

Eine Primärwicklung (3) eines Netztransformators (Tr) ist einerseits über einen Eingangsschalter (S1) und einen Stromabnehmer mit dem Wechselspannungsnetz (1) und andererseits über einen Wechselschalter (S6) und ein Fahrzeugrad (6) mit einer auf Nullpotential befindlichen Schiene (7) verbunden. Eine 1. Sekundärwicklung (4) des Netztransformators (Tr), zu der ein Schalter (S4) in Reihe geschaltet ist, ist einerseits mit einem elektrischen Verbindungspunkt der GTO-Thyristoren des 2Quadrantenstellers (St1) sowie über einen induktiven Widerstand bzw. eine Glättungsdrossel (L1) und einen dazu in Reihe angeordneten Umschalter (S8) mit einem positiven Pol (P) des Gleichspannungszwischenkreises (11) und andererseits mit dem elektrischen Verbindungspunkt der GTO-Thyristoren des 2Quadrantenstellers (St2) sowie über einen induktiven Widerstand bzw. eine Glättungsdrossel (L2) und einen dazu in Reihe angeordneten Umschalter (S9) mit dem positiven Pol (P) verbunden.

Eine 2. Sekundärwicklung (5) des Netztransformators (Tr), zu der ein Schalter (S5) in Reihe geschaltet ist, ist einerseits mit einem elektrischen Verbindungspunkt der GTO-Thyristoren des 2Quadrantenstellers (St3) sowie über einen induktiven Widerstand bzw. eine Glättungsdrossel (L3) und einen dazu in Reihe angeordneten Schalter (S10) mit dem positiven Pol (P) des Gleichspannungszwischenkreises (11) und andererseits-mit dem elektrischen Verbindungspunkt der GTO-Thyristoren des 2Quadrantenstellers (St4) sowie über einen induktiven Widerstand bzw. eine Glättungsdrossel (L4) und einen dazu in Reihe angeordneten Schalter (S11) mit dem positiven Pol (P) verbunden.

Eine Filterdrossel (LF) ist einerseits über einen Eingangsschalter (S2) und über einen Stromabnehmer mit dem Gleichspannungsnetz (2) und andererseits über einen Schalter (S7) mit den positiven Potentialklemmen der 2Quadrantensteller (St1 - St4) und den Umschaltern (S8, S9) sowie über einen Filterkondensator (CF), an dem eine Filterspannung bzw. Eingangsgleichspannung bzw. 1. Gleichspannung (UF) abfällt, mit den negativen Potentialseiten der 2Quadrantensteller (St1 - St4) sowie mit einem negativen Pol (N) des Gleichspannungszwischenkreises (11) verbunden. Die Filterdrossel (LF) und der Schalter (S7) sind überbrückbar durch einen Schalter (S3).

In einem Parallelzweig zu dem 2Quadrantensteller (St1) ist ein Gleichspannungsdetektor (8) vorgesehen, der den Istwert der 1. Gleichspannung (UF) detektiert und einem Spannungsregler (10) zuleitet. Der Spannungsregler (10) vergleicht die 1. Gleichspannung (UF) mit einem vorgebbaren 1. Gleichspannungssollwert (UFS) und regelt in Abhängigkeit vom Ergebnis dieses Vergleiches das Einschaltverhältnis der GTO-Thyristoren der 2Quadrantensteller (St1 - St4) phasenversetzt so, daß die 1. Gleichspannung (UF) möglichst gut mit dem 1. Gleichspannungssollwert (UFS) übereinstimmt. Der Übersichtlichkeit halber ist nur eine Steuerverbindung zu einem GTO-Thyristor des 2Quadrantenstellers (St4) dargestellt.

Ein 2. Gleichspannungssollwert (UDS) für die Zwischenkreisgleichspannung (UD) steht mit dem 1. Gleichspannungssollwert (UFS) in einer konstanten Beziehung: UDS = a · UFS.

Bei Wechselstromspeisung sind die Schalter (S1, S3, S4, S5) geschlossen; die Umschalter (S6, S8, S9) befinden sich in der ausgezogen dargestellten Position, und die Schalter (S2, S7, S10, S11) sind offen. Die Filterdrossel (LF) und der Filterkondensator (CF) wirken als Saugkreis des Gleichspannungszwischenkreises (11).

Bei Gleichstromspeisung sind die Schalter (S2, S7, S10, S11) geschlossen; die Umschalter (S6, S8, S9) befinden sich in der gestrichelt dargestellten Position, und die Schalter (S1, S3, S4, S5) sind offen. Die 2Quadrantensteller (St1 - St4) sind über je einen induktiven Widerstand (L1 - L4) an den positiven Pol (P) des Gleichspannungszwischenkreises (11) angeschlossen.

Fig. 2 zeigt eine Abwärtsstellerschaltunq mit n parallelgeschalteten 1Quadrantenstromstellern bzw. Gleichstromstellern (St1' - Stn') mit je einem induktiven Energiespeicher bzw. Widerstand (L1 - Ln), der einerseits mit dem positiven Pol (P) des Gleichspannungszwischenkreises mit dem Zwischenkreiskondensator (CD) und andererseits mit den Kathoden eines Thyristors und einer Diode verbunden ist, welche anodenseitig untereinander verbunden und zu dem kapazitiven Energiespeicher bzw. Filterkondensator (CF) in Reihe geschaltet sind. Die 1. Gleichspannung (UF) beträgt 2,8 kV und die 2. Gleichspannung (UD) 700 V. Der Spannungsregler (10) ist gemäß Fig. 1 angeordnet.

Fig. 3 zeigt eine Aufwärtsstellerschaltung mit n parallelgeschalteten 1Quadrantenspannungsstellern bzw. Gleichspannungsstellern (St1" - Stn") mit je einem induktiven Widerstand (L1 - Ln), der einerseits mit dem positiven Pol der 1. Gleichspannung (UF) und andererseits mit den Anoden eines Thyristors und einer Diode verbunden ist, welche kathodenseitig untereinander verbunden und zu dem Zwischenkreiskondensator (CD) in Reihe geschaltet sind. Die 1. Gleichspannung (UF) beträgt 700 V und die 2. Gleichspannung (UD) 2,8 kV. Der Spannungsregler (10) vergleicht die 2. Gleichspannung (UD) mit dem 2. Gleichspannungssollwert (UDS) und steuert die Thyristoren der Gleichspannungssteller (St1" - Stn") in gleicher Weise wie der Spannungsregler (10) gemäß Fig. 2.

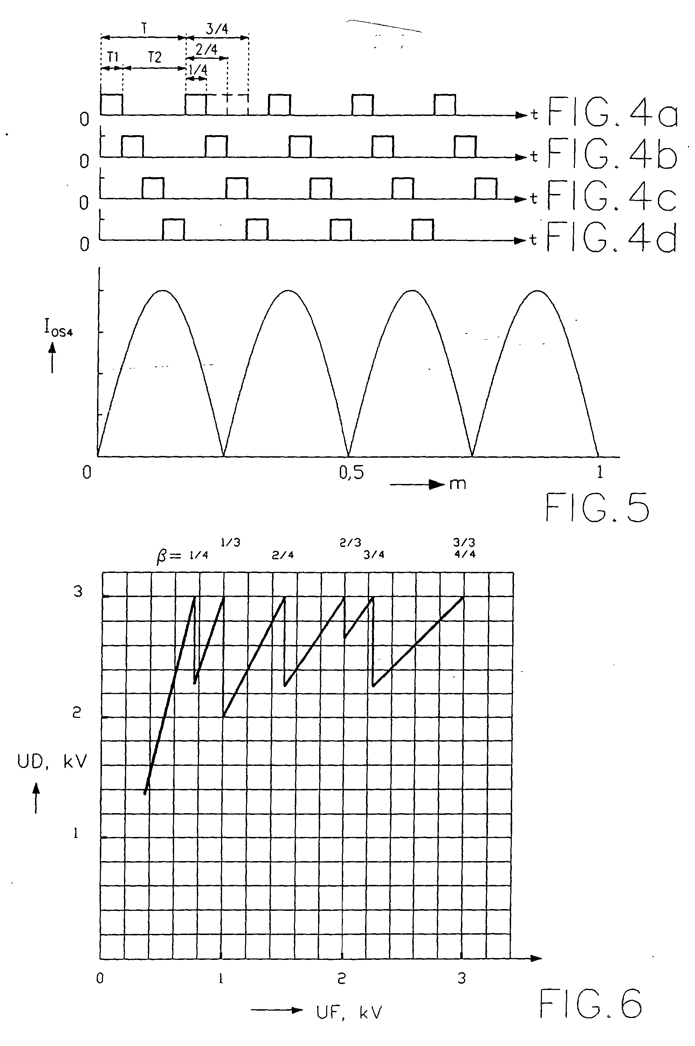

Die Fig. 4a bis 4c zeigen Leitdauersignale der 2Quadrantensteller (St1 - St4) gemäß Fig. 1 in Abhängigkeit von der Zeit (t) mit konstanter Taktfolge einer Taktdauer (T). Eine Einschaltdauer bzw. Leitdauer (T1) und eine anschliessende Ausschaltdauer bzw. Sperrdauer (T2) ergeben zusammen die Taktdauer (T). Bei 4 in Betrieb befindlichen, parallelgeschalteten 2Quadrantenstellern (St1 - St4) wird die Leitdauer (T1) mittels des Spannungsreglers (10) nicht beliebig, sondern nur auf 1/4 oder 2/4 oder 3/4 (in Fig. 4a gestrichelt angedeutet) oder 4/4 der Taktdauer (T) eingestellt. Die Leitdauern (T1) aller 4 2Quadrantensteller (St1 - St4) sind gleich lang, aber jeweils um 1/4 der Taktdauer (T) phasenversetzt, vgl. die Fig. 4b - 4c.

Fig. 5 zeigt den Summenstörstrom (I_{OS4}) in willkürlichen Einheiten in Abhängigkeit von einem Einschaltverhältnis bzw. Tastverhältnis β = T1/T für 4 parallelgeschaltete 2Quadrantensteller (St1 - St4). Man erkennt, daß der Summenstörstrom (I_{OS4}) für β = 1/4, β = 2/4, β = 3/4 und β = 4/4 den Wert 0 annimmt. Für einen Summenstörstrom ^{(I}OSi⁾ gilt:
I_{OSi} = [0,5 · Σ Iᵢ ²]⁰ʼ⁵, summiert über i, i ganzzahlig ≤ n,
wobei mit (Iᵢ) die Amplituden der Oberschwingungsströme i. Ordnung bezeichnet sind.

Fig. 6 zeigt in 6 stark ausgezogen dargestellten Geradenabschnitten oberschwingungsfreie Gleichspannungsübersetzungen von der 1. Gleichspannung (UF) in kV zur 2. Gleichspannung (UD) in kV für bis zu 4 parallelgeschaltete 1Quadrantenspannungssteller (St1" - St4") gemäß Fig. 3, die in Abhängigkeit von der 1. Gleichspannung (UF) mit unterschiedlichen Tastverhältnissen (β) betrieben werden.

Bei dem Anwendungsbeispiel gemäß Fig. 3 wird, unabhängig von einer möglicherweise schwankenden, d. h. nicht konstanten Eingangsgleichspannung (UF), nach Möglichkeit eine konstante Zwischenkreisgleichspannung (UD) von ca. 2,8 kV (= 2. Gleichspannungssollwert (UDS)) gewünscht. Dies ist oberschwingungsfrei nur für 6 Werte von (UF) möglich, vgl. Fig. 6. Will man die 1Quadrantenspannungssteller (St1" - St4") oberschwingungsfrei betreiben, so muß man geringe Spannungsabweichungen der 2. Gleichspannung (UD) vom 2. Gleichspannungssollwert (UDS) in Kauf nehmen. In einem Spannungsbereich von UF ≤ 750 V wird mit einem Tastverhältnis β = 1/4 getaktet, wobei 4 1Quadrantenspannungssteller (St1" - St4") in Betrieb sind und die 2. Gleichspannung (UD) bis 3 kV ansteigt. Im anschliessenden Spannungsbereich von 750 V ≤ UF ≤ 1 kV wird mit einem Tastverhältnis β = 1/3 getaktet, wobei 3 von den 4 1Quadrantenspannungsstellern (St1" - St4) in Betrieb sind und die 2. Gleichspannung (UD) von 2,25 kV bis 3 kV ansteigt. Bei höheren Eingangsgleichspannungen (UF) wird nacheinander mit einem Tastverhältnis β = 2/4, β = 2/3, β = 3/4 und β = 4/4 oder 3/3 getaktet.

Der Spannungsregler (10) wählt in Abhängigkeit von der Eingangsgleichspannung (UF) dasjenige Tastverhältnis (β) aus, das eine dem 2. Gleichspannungssollwert (UDS) möglichst nahekommende Spannungsübersetzung ermöglicht. Dies erfolgt durch eine Minimalauswahl aller zulässigen Tastverhältnisse β = m/1 mit 1 ≤ m ≤ 1, 2 ≤ 1 ≤ n; m, 1 ganzzahlig.

Sind n Stromrichter (St1 - St4, St1' - Stn', St1" - Stn") in Parallelbetrieb, so kann das Tastverhältnis β = 1/n oder β = 2/n oder ... β = n/n betragen, wobei jeweils bei diesen Werten der Summenstörstrom (I_{OSn}) verschwindet, entsprechend Fig. 5. Die n Gleichspannungssteller (St1 - St4, St1' - Stn', St1" - Stn") takten jeweils um T/n phasenverschoben zueinander, gemäß Fig. 4a - 4d. Bei n parallelgeschalteten Gleichspannungsstellern (St1 - St4, St1' - Stn', St1" - Stn") müssen nicht alle in Betrieb sein; es können erforderlichenfalls nur 1 von ihnen getaktet werden. Unter den zulässigen Werten von β = m/l wird für einen Betrieb mit konstanter Spannungsumsetzung derjenige Wert ausgewählt, ggf. auch ohne den Spannungsregler (10), für den UFS/UDS = m/l oder ≈ m/l ist, wobei UFS ≤ UDS sein muß. Die Auswahl erfolgt so, daß alle zulässigen Werte von m/l gebildet werden und das Minimum von |UFS/UDS - m/l| bestimmt wird. Ist diese Differenz ≠ 0, so treten Oberschwingungen auf, vgl. Fig. 5. In diesem Fall einer konstanten Spannungsumsetzung ist keine Regelung erforderlich; es genügt eine Steuerung.

Im Falle, daß keine konstante Spannungsumsetzung gewünscht wird und die 1. Gleichspannung (UF) veränderlich ist, jedoch eine konstante 2. Gleichspannung (UD) entsprechend einem 2. Gleichspannungssollwert (UDS) gewünscht wird, ist in den vorstehenden Beziehungen UFS durch UF und die Steuerung durch eine Regelung zu ersetzen. Dabei sind Oberschwingungen in Kauf zu nehmen.

| Für das Tastverhältnis (β) besteht folgende Aussteuermatrix: | | | | | | | |
|---|---|---|---|---|---|---|---|
| 1\m | 1 | 2 | 3 | 4 | 5 | ... | n |
| 1 | 1/1 | - | - | - | - | ... | - |
| 2 | 1/2 | 2/2 | - | - | - | ... | - |
| 3 | 1/3 | 2/3 | 3/3 | - | - | ... | - |
| 4 | 1/4 | 2/4 | 3/4 | 4/4 | - | ... | - |
| 5 | 1/5 | 2/5 | 3/5 | 4/5 | 5/5 | ... | - |
| . | . | . | . | . | . | ... | - |
| . | . | . | . | . | . | ... | - |
| . | . | . | . | . | . | ... | - |
| n | 1/n | 2/n | 3/n | 4/n | 5/n | ... | 1/n |

Wichtig ist, daß zur Reduzierung von Oberschwingungen 1 von n Gleichspannungsstellern (St1 - St4, St1' - Stn', St1" - Stn") derart phasenversetzt getaktet werden, daß ein 1. Stromrichter (St1 - St4, St1' - Stn', St1" - Stn") um (1/1). einer Taktdauer (T) später gezündet bzw. eingeschaltet wird als ein (1 - 1). Stromrichter (St1 - St4, St1' - Stn', St1" - Stn") und daß das Verhältnis von Einschaltdauer bzw. Leitdauer (T1) zu Taktdauer (T), d. h., das Tastverhältnis (β) jedes der 1 Stromrichter (St1 - St4, St1' - Stn', St1" - Stn") auf einen Wert von β = m/l gesteuert wird. Vorzugsweise wird das Tastverhältnis (β) der 1 Stromrichter (St1 - St4, St1' - Stn', St1" - Stn") auf einen solchen Wert eingestellt, für den der Betrag der Differenz zwischen dem Verhältnis von 1. zu 2. Gleichspannungssollwert (UFS, UDS) und dem Tastverhältnis (β) ein Minimum wird, d. h., für den |UFS/UDS - β| = min ist oder für das |UF/UDS - β| = min ist.

Bei einem Umschalten des Tastverhältnisses (β) werden dessen Abweichungen von einem der zulässigen Werte derart zeitlich begrenzt, daß vorgebbare Signalfrequenzgrenzwerte nicht überschritten werden.

Kleine Abweichungen von der idealen konstanten Aussteuerung sind zulässig, um die Schwankungsbreite der Zwischenkreisspannung (UD) auf ein tolerierbares Maß zu begrenzen, ohne die Oberschwingungsströme allzu stark ansteigen zu lassen. Beide Maßnahmen können miteinander kombiniert werden.

### BEZEICHNUNGSLISTE

- 1: Wechselspannungsnetz
- 2: Gleichspannungsnetz
- 3: Primärwicklung von Tr
- 4: 1. Sekundärwicklung von Tr
- 5: 2. Sekundärwicklung von Tr
- 6: Fahrzeugrad
- 7: Schiene
- 8: Gleichspannungsdetektor
- 9: Wechselrichter
- 10: Spannungsregler
- 11: Gleichspannungszwischenkreis

- CD: Zwischenkreiskondensator
- CF: Filterkondensator
- I_{OS4}: Summenstörstrom bei 4 parallelen Stromrichtern
- LF: Filterdrossel
- L1 - Ln: Glättungsdrossel, induktive Widerstände
- N: negativer Pol von 11
- P: positiver Pol von 11
- RB: Bremswiderstand
- St1 - St4: Stromrichter, 2Quadrantensteller
- St1' - Stn': Stromrichter, 1Quadrantenstromsteller
- St1" - Stn": Stromrichter, 1Quadrantenspannungssteller
- S1 - S11: Schalter
- T: Taktdauer
- T1: Einschaltdauer, Leitdauer
- T2: Ausschaltdauer, Sperrdauer
- Tr: Netztransformator
- UD: Zwischenkreisgleichspannung
- UDS: Gleichspannungssollwert von UD
- UF: Filterspannung, Eingangsgleichspannung
- UFS: Gleichspannungssollwert von UF
- β: Tastverhältnis, Einschaltverhältnis T1/T

## Patentansprüche

1. Verfahren zur Umsetzung von Gleichspannungen von einer
1. Gleichspannung (UF) auf eine 2. Gleichspannung (UD),
a) wobei die 1. Gleichspannung (UF) durch einen Kondensator (CF) spannungsmäßig gestüzt ist,
b) wobei n Stromrichter (St1 - St4, St1' - Stn', St1" - Stn") auf die 1. Gleichspannungsseite kondensatorseitig parallelgeschaltet sind und mit der 1. Gleichspannung (UF) in Wirkverbindung stehen,
c) sowie auf die 2. Gleichspannungsseite über mindestens je eine Glättungsdrossel bzw. je einen induktiven Widerstand (L1 - Ln) mit einer 2. Gleichspannung (UD) in Wirkverbindung stehen,
d) wobei im Betrieb befindliche Stromrichter (St1 - St4, St1' - Stn', St1" - Stn") phasenversetzt getaktet werden,
dadurch gekennzeichnet,
e) daß zur Reduzierung von Oberschwingungen 1 von n Stromrichtern (St1 - St4, St1' - Stn', St1" - Stn") derart regelmäßig gegenseitig phasenversetzt getaktet werden, daß die Phasenversetzung zwischen zwei der 1 nacheinander getakteten Stromrichter (St1 - St4, St1' - Stn', St1" - Stn") den 1. Teil einer Taktdauer (T) beträgt, und
f) daß ein Verhältnis von Einschaltdauer bzw. Leitdauer (T1) zu Taktdauer (T), d. h., ein Tastverhältnis (β) jedes der 1 Stromrichter auf einen der möglichen Werte von β = m/l eingestellt wird, 2 ≤ 1 ≤ n, 1 ≤ m ≤1; 1, m ganzzahlig.

2. Verfahren nach Anspruch 1, dadurch gekennzeichnet,
a) daß von allen möglichen Werten des Tastverhältnisses (β) derjenige Wert zum Betrieb der 1 Stromrichter (St1 - St4, St1' - Stn', St1" - Stn") ausgewählt wird, der einem Spannungsverhältnis von x/y am nächsten kommt oder, bei mehreren gleichen Werten, einer von ihnen, wobei x diejenige der beiden 1. oder 2. Gleichspannungen (UF, UD) ist, deren Amplitude kleiner oder gleich derjenigen der jeweils anderen Gleichspannung y ist, oder
b) wobei x derjenige der 1. oder 2. Gleichspannungssollwerte (UFS, UDS) ist, der kleiner oder gleich dem anderen Gleichspannungssollwert y ist.

3. Verfahren nach Anspruch 1 oder 2, dadurch gekennzeichnet,
a) daß ein 1. Gleichspannungssollwert UFS der 1. Gleichspannung (UF) kleiner oder gleich einem 2. Gleichspannungssollwert UDS der 2. Gleichspannung (UD) ist und
b) daß das Tastverhältnis β der 1 Stromrichter (St1 - St4, St1' - Stn', St1" - Stn") auf einen solchen Wert eingestellt wird, für den der Betrag der Differenz zwischen dem Verhältnis von 1. zu 2. Gleichspannungssollwert (UFS, UDS) und dem Tastverhältnis (β) ein Minimum wird, d. h., für den |UFS/UDS - β| = min ist.

4. Verfahren nach Anspruch 1 oder 2, dadurch gekennzeichnet,
a) daß die 1. Gleichspannung UF kleiner oder gleich einem 2. Gleichspannungssollwert UDS der 2. Gleichspannung (UD) ist,
b) daß das Tastverhältnis β der 1 Stromrichter (St1 - St4, St1' - Stn', St1" - Stn") in Abhängigkeit von der 1. Gleichspannung (UF) geregelt und
c) auf einen solchen Wert eingestellt wird, für den der Betrag der Differenz zwischen dem Verhältnis von der 1. Gleichspannung (UF) zu dem 2.
Gleichspannungssollwert (UDS) und dem Tastverhältnis (β) ein Minimum wird, d. h., für den
|UF/UDS - β| = min ist.

5. Verfahren nach Anspruch 1 oder 2, dadurch gekennzeichnet,
a) daß ein 1. Gleichspannungssollwert UFS der 1. Gleichspannung (UF) kleiner oder gleich der 2. Gleichspannung UD ist,
b) daß das Tastverhältnis β der 1 Stromrichter (St1 - St4, St1' - Stn', St1" - Stn") in Abhängigkeit von der 2. Gleichspannung (UD) geregelt und
c) auf einen solchen Wert eingestellt wird, für den der Betrag der Differenz zwischen dem Verhältnis von dem 1. Gleichspannungssollwert (UFS) zu der 2.
Gleichspannung (UD) und dem Tastverhältnis (β) ein Minimum wird, d. h., für den
|UFS/UD - β| = min ist.

6. Verfahren nach Anspruch 4 oder 5, dadurch gekennzeichnet, daß bei einem Umschalten des Tastverhältnisses (β) dessen Abweichungen von einem der zulässigen Werte derart zeitlich begrenzt sind, daß vorgebbare Signalfrequenzgrenzwerte nicht überschritten werden.

## Claims

1. Method for the conversion of DC voltages from a 1st DC voltage (UF) to a 2nd DC voltage (UD),
a) the 1st DC voltage (UF) being supported in voltage terms by a capacitor (CF),
b) n converters (St1 - St4, St1' - Stn', St1" - Stn") being connected in parallel to the 1st DC voltage side on the capacitor side and being operatively connected to the 1st DC voltage (UF)
c) and being operatively connected on the 2nd DC voltage side, via at least one smoothing inductor or one inductive resistor (L1 - Ln) in each case, to a 2nd DC voltage (UD),
d) converters (St1 - St4, St1' - Stn', St1" - Stn") which are in operation being pulsed in a phase-shifted manner,
characterized
e) in that, in order to reduce harmonics, 1 of n converters (St1 - St4, St1'- Stn', St1" - Stn'') are regularly pulsed in a mutually phased-shifted manner such that the phase shift between two of the 1 successively pulsed converters (St1 - St4, St1' - Stn', St1" - Stn") amounts to the 1th part of one clock period (T), and
f) in that a ratio of the switched-on duration or conducting period (T1) to the clock period (T), that is to say a duty ratio (β) of each of the 1 converters, is set to one of the possible values of β = m/l, where 2 ≤ l ≤ n, l ≤ m ≤ 1; l, m being integers.

2. Method according to Claim 1, characterized
a) in that, of all the possible values of the duty ratio (β), that value is selected for operation of the 1 converters (St1 - St4, St1' - Stn', St1" - Stn") which comes closest to a voltage ratio of x/y or, in the event of a plurality of identical values, is one of them, x being that of the two 1st or 2nd DC voltages (UF, UD) whose amplitude is less than or equal to that of the respective other DC voltage y, or
b) x being that of the 1st or 2nd required DC voltage values (UFS, UDS) which is less than or equal to the other required DC voltage value y.

3. Method according to Claim 1 or 2, characterised
a) in that a 1st required DC voltage value UFS of the 1st DC voltage (UF) is less than or equal to a 2nd required DC voltage value UDS of the 2nd DC voltage (UD) and
b) in that the duty ratio β of the 1 converters (St1 - St4, St1'- Stn', St1" - Stn") is set to a value such that the magnitude of the difference between the ratio of the 1st required DC voltage value (UFS) to the 2nd required DC voltage value (UDS) and the duty ratio (β) is a minimum, that is to say such that |UFS/UDS -β| = min.

4. Method according to Claim 1 or 2, characterised
a) in that the 1st DC voltage UF is less than or equal to a 2nd required DC voltage value UDS of the 2nd DC voltage (UD),
b) in that the duty ratio β of the 1 converters (St1 - St4, St1' - Stn', St1" - Stn") is regulated as a function of the 1st DC voltage (UF), and
c) is set to a value such that the magnitude of the difference between the ratio of the 1st DC voltage (UF) to the 2nd required DC voltage value (UDS) and the duty ratio (β) is a minimum, that is to say such that |UF/UDS - β| = min.

5. Method according to Claim 1 or 2, characterised
a) in that a 1st required DC voltage value UFS of the 1st DC voltage (UF) is less than or equal to the 2nd DC voltage UD,
b) in that the duty ratio β of the 1 converters (St1 - St4, St1' - Stn', St1" - Stn") is regulated as a function of a function of the 2nd DC voltage (UD) and
c) is set to a value such that the magnitude of the difference between the ratio of the 1st required DC voltage value (UFS) to the 2nd DC voltage (UD) and the duty ratio (β) is a minimum, that is to say such (UFS/UD - β| = min.

6. Method according to Claim 4 or 5, characterised in that, in the event of a change in the duty ratio (β), its deviations from one of the permissible values are limited in time in such a manner that signal frequency limits which can be predetermined are not exceeded.

## Revendications

1. Procédé de conversion de tensions continues d'une 1ère tension continue (UF) en une 2ème tension continue (UD),
a) la 1ère tension continue (UF) étant supportée en tension par un condensateur (CF),
b) n convertisseurs (St1 - St4, St1' - Stn', St1" - Stn") étant montés en parallèle du côté du condensateur du côté de la 1ère tension continue et se trouvant en relation active avec la 1ère tension continue (UF),
c) et se trouvant en relation active avec une 2ème tension continue (UD) du côté de la 2ème tension continue, par le biais d'au moins une bobine de lissage, respectivement une résistance inductive (L1 -Ln),
d) les convertisseurs en fonctionnement (St1 - St4, St1' - Stn', St1'' - Stn") étant synchronisés en déphasage,
caractérisé en ce que
e) pour réduire les harmoniques, 1 convertisseurs (St1 - St4, St1' - Stn', St1" - Stn") sur n sont synchronisés en déphasage régulier mutuel de manière à ce que le déphasage entre deux des 1 convertisseurs (St1 - St4, St1' - Stn', St1" - Stn") synchronisés successivement corresponde à la lième partie d'une période (T), et
f) en ce qu'un rapport de la durée de fermeture, respectivement la durée de commande (T1) sur la période (T), c'est-à-dire un facteur de réglage par impulsions (β) de chacun des 1 convertisseurs soit ajusté à l'une des valeurs possibles de β = m/l, avec 2 ≤ 1 ≤ n, 1 ≤ m ≤ 1; 1 et m étant des nombres entiers.

2. Procédé selon la revendication 1, caractérisé
a) en ce que parmi toutes les valeurs possibles du facteur de réglage par impulsions (β), on choisit la valeur pour le fonctionnement des l convertisseurs (St1 - St4, St1' - Stn', St1" - Stn") qui se rapproche le plus d'un rapport de tensions de x/y, ou, dans le cas de plusieurs valeurs égales, l'une de celles-ci, avec x étant l'une de la 1ère ou de la 2ème tension continue (UF, UD), dont l'amplitude est inférieure ou égale à celle de l'autre tension continue respective y, ou
b) où x est la valeur de consigne de la 1ère ou de la 2ème tension continue (UFS, UDS) qui est inférieure ou égale à l'autre valeur de consigne y de tension continue.

3. Procédé selon la revendication 1 ou 2, caractérisé en ce que
a) une 1ère valeur de consigne de tension continue UFS de la 1ère tension continue (UF) est inférieure ou égale à une 2ème valeur de consigne de tension continue UDS de la 2ème tension continue (UD) et
b) en ce que le facteur de réglage par impulsions (β) des l convertisseurs (St1 - St4, St1' - Stn', St1" - Stn") est ajusté à une valeur telle pour laquelle la valeur de la différence entre le rapport de la 1ère à la 2ème valeur de consigne de tension continue (UFS, UDS) et le facteur de réglage par impulsions (β) est un minimum, c'est-à-dire pour laquelle | UFS/UDS - β | = min.

4. Procédé selon la revendication 1 ou 2, caractérisé en ce que,
a) la 1ère tension continue UF est inférieure ou égale à une 2ème valeur de consigne de tension continue (UDS) de la 2ème tension continue (UD),
b) en ce que le facteur de réglage par impulsions (β) des l convertisseurs (St1 - St4, St1' - Stn', St1" - Stn") est réglé en fonction de la 1ère tension continue (UF) et
c) est ajusté à une valeur pour laquelle la valeur de la différence entre le rapport de la 1ère tension continue (UF) à la 2ème valeur de consigne de tension continue (UDS) et le facteur de réglage par impulsions (β) est un minimum, c'est-à-dire pour laquelle | UF/UDS - β | = min.

5. Procédé selon la revendication 1 ou 2, caractérisé en ce que,
a) une 1ère valeur de consigne de tension continue UFS de la 1ère tension continue (UF) est inférieure ou égale à la 2ème tension continue UD,
b) le facteur de réglage par impulsions β des l convertisseurs (St1 - St4, St1' - Stn', St1'' - Stn'') est réglé en fonction de la 2ème tension continue (UD) et
c) est ajusté à une valeur pour laquelle la valeur de la différence entre le rapport de la 1ère valeur de consigne de tension continue (UFS) à la 2ème tension continue (UD) et le facteur de réglage par impulsions (β) est un minimum, c'est-à-dire pour laquelle | UFS/UD - β | = min.

6. Procédé selon la revendication 4 ou 5, caractérisé en ce que pour un changement du facteur de réglage par impulsions (β) ses écarts par rapport à l'une des valeurs acceptables sont limités dans le temps de manière à ce que des valeurs limites de fréquence de signal ne soient pas excédées.
